# EUROPEAN PATENT APPLICATION

(11) **EP 0 939 006 A2**
(43) Date of publication of application: **01.09.1999**
(21) Application number: 99103581.7
(22) Date of filing: 24.02.1999
(51) Int. Cl.: B60R 9/04

(54) **A unit for attaching a support device to the roof of a motor vehicle and a roof having such a unit**

(30) Priority: 27.02.1998 IT TO980164
(71) Applicant: FIAT AUTO S.p.A., 10135 Torino (IT)
(72) Inventor: Demaria, Claudio, 14018 Villafranca d'Asti (IT)
(74) Representative: Eccetto, Mauro

(57) **Abstract**

A roof (12) for a motor vehicle provided with at least a pair of longitudinal beams (6) supports a luggage rack (15) which is coupled to the longitudinal beams (6) themselves by means of a connection unit (23) having, for each beam (6), a longitudinal guide body (25) provided with a retaining seat (26) slidingly engaged by a projection (19) integral with the associated longitudinal beam (6); an associated slide (35) carried by the luggage rack (15) is coupled to each guide body (25) and is axially movable along the guide body (25) between a retracted position in which the luggage rack (15) lies over the roof (12) of the vehicle, and an extended position in which the luggage rack (15) projects cantilevered from the roof (12) itself.

## Description

The present invention concerns a unit for attaching a support device to the roof of a motor vehicle. In particular, the present invention concerns a unit for attaching a luggage rack to the roof of a motor vehicle, and the following description refers explicitly to this embodiment without loss of generality thereby.

As is known, luggage racks are usually attached to the roof of the motor vehicle using connection units comprising a plurality of support elements disposed on various portions of the roof, and the same number of anchorage devices which hold the support elements against the roof. The anchorage devices usually comprise respective anchorage brackets which are attached to retaining portions of the roof, and associated nut and screw assemblies for tightening the anchorage brackets.

Although universally used, the known connection units described above are unsatisfactory in that they are, particularly for inexpert persons, difficult to assemble and dismantle which, in many cases, damages the paintwork of the roof and/or the sides.

Furthermore, because they are relatively complicated, they are relatively expensive.

Once the luggage rack has been fitted, it can, in many cases be difficult to reach, so that the loading and unloading of objects in general, and of heavy or bulky objects in particular, which are usually awkward, difficult to achieve, especially when the luggage racks are fitted to the roofs of high motor vehicles such as, for example, commercial or single-volume motor vehicles.

The object of the present invention is to provide a unit for attaching a support device to the roof of a motor vehicle, which enables the disadvantages described above to be overcome simply and economically.

According to the present invention, there is provided a unit for attaching a support device to the roof of a motor vehicle including at least two longitudinal beams; the unit being characterised in that it includes guide means associated with the said longitudinal beams; first connection means carried by the said guide means and which are coupled positively to second connection means carried by the said beams; and slide means carried by the said support device and slidingly coupled to the said guide means to move between a retracted position in which the said support device is superimposed over the said guide means and, in use over the roof of the motor vehicle, and an extended position in which the said support device projects at least partly from the said guide means and, in use, from the said roof.

The invention will now be described with reference to the accompanying drawings, which illustrates a non-limitative example, in which:
Figure 1 is a perspective view of a preferred embodiment according to the present invention of the unit for attaching a luggage rack to the roof of a motor vehicle, partially illustrated;
Figure 2 illustrates, in section, the unit of Figure 1 attached to the roof of the motor vehicle; and
Figure 3 is a perspective view of a detail of Figure 2.

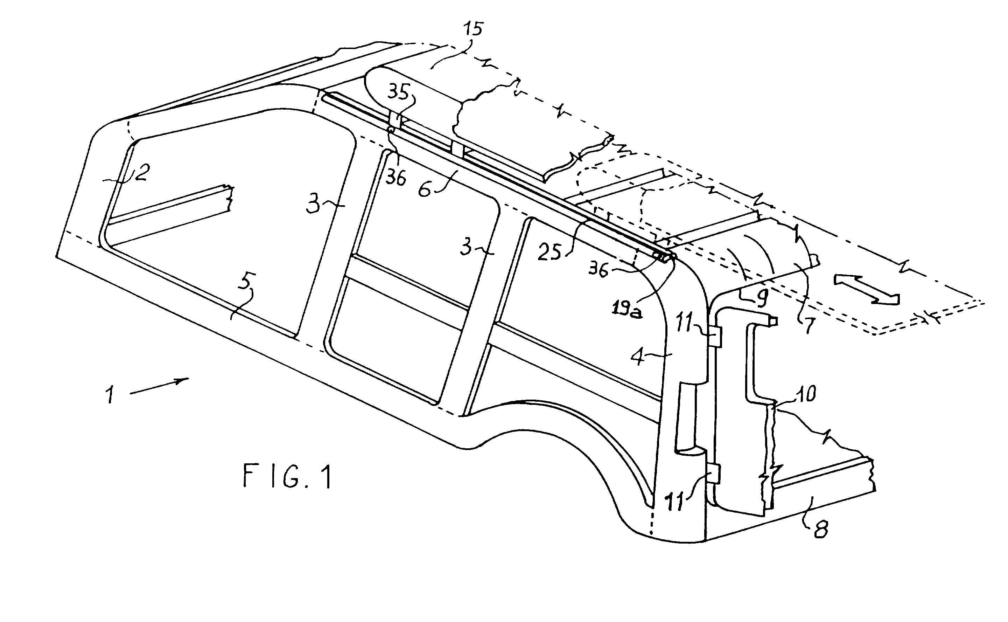

With reference to Figure 1, the reference numeral 1 generally indicates a motor vehicle body including two sides, each of which comprises, in turn, a front pillar 2, two central pillars 3 and a rear pillar 4 connected to a lower beam 5 and an upper longitudinal beam 6. The rear pillar 4 is also connected to two rear crosspieces 7 and 8, with which it defines, together with a further pillar 4, an opening 9 which is closed by a hinged door 10.

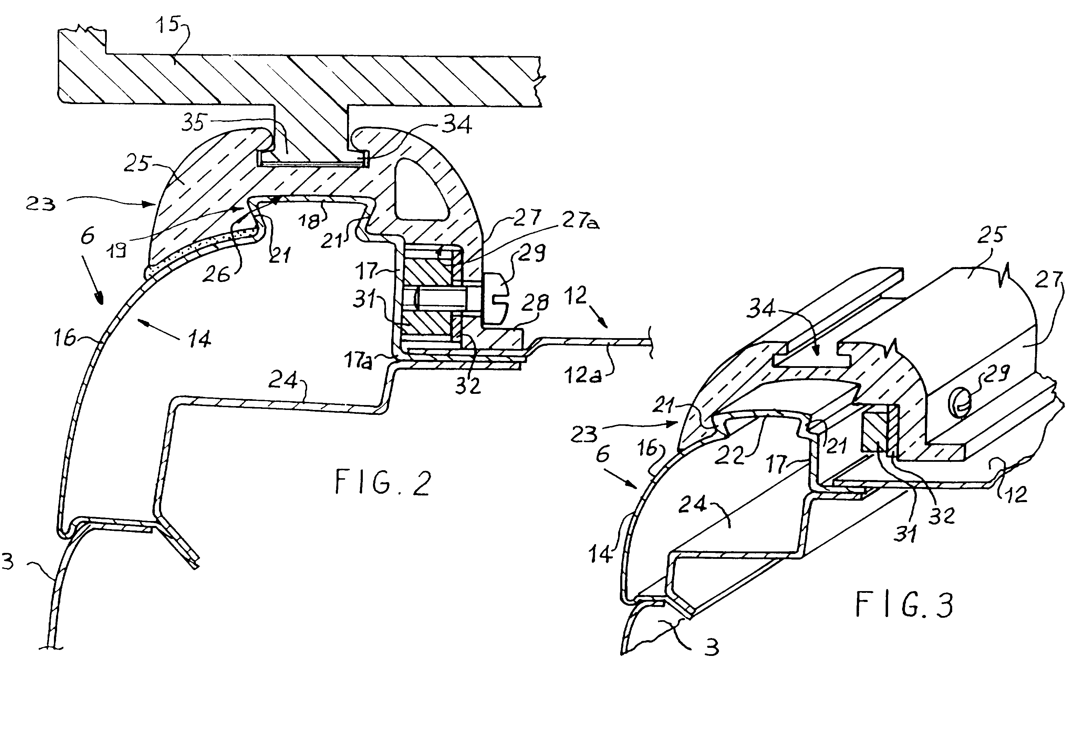

Each upper longitudinal beam 6 (Figures 2 and 3) laterally delimits a roof 12 of the motor vehicle, and includes an outer profiled element 14 formed preferably by profiling and which remains partly in view in the finished motor vehicle, and an inner profiled element 24 firmly connected in known manner to the profiled element 14. A support device 15 is associated with the beams 6, for example, a closed container as illustrated in Figure 1 or, alternatively, a common open luggage rack.

To this end, each profiled element 14 has an outer curved portion 16 which remains in view in the finished motor vehicle, an inner portion 17 having a flange 17a bent substantially at a right angle towards the other beam 6 and connected to a closure panel 12a of the roof 12, and a shaped intermediate portion 18 which upwardly delimits the associated beam 6.

The upper portion 18 is so shaped as to define a longitudinal projection 19 formed integrally with the remaining part of the profiled element 6 and having a dovetail shape in cross section. In particular, the projection 19 includes two facing side walls 21 that converge towards each other and the profiled element 24, and a substantially flat intermediate wall 22 (Figure 3), and is closed by a pair of plugs 19a each positively coupled in known way to an axial end portion of the projection 19 itself.

The device 15 is attached to the beams 6 by a connection unit 23 which includes, for each beam 6, an associated elongate body 25 which extends over the associated beam 6 and has a longitudinal channel 26 on the part facing the associated beam 6 itself. Each channel 26 has a transverse section complementary to the transverse section of the associated projection 19, and is engaged in an axially slidable manner by the associated projection 19 to define a sliding dovetailed coupling.

Each body 25 includes a wall 27 which extends between the beams 6 in a position facing and spaced from the portion 17 with which it defines a cavity 27a, and terminates at a flange 28 bent at a right angle overlying a perimetral portion of the panel 12a.

Each body 25 is attached to the associated profiled element 14 by means of associated screws 29, only one of which is visible in Figures 2 and 3, the shanks of which extend through respective holes formed in the wall 27 and engage respective threaded nuts or housings 31 which extend into the cavity 27a and are firmly connected to the portion 17 by means of brackets 32 which are also housed in the cavity 27a.

In an embodiment not illustrated, the channel 26 has a cross section that is not perfectly complementary to that of the projection 19 so that there is transverse play, that is, parallel to the axis of the screws 29, and the body 25 is firmly connected to the beam 6 by a plurality of blind rivets extending through the projection 19 orthogonal to the screws 29.

Referring again to Figures 2 and 3, each body 25 also has a further longitudinal channel 34 which, in the particular example described, has an inverted T-shape in cross section, and forms the sliding guide for an associated slider which, in this particular case, is defined by a pair of runners 35 firmly connected to a structure of the device 15. Each runner 35 is axially slidable in the associated channel 34 under the thrust of an operator so as to enable the operator to move the device 15, in use, between a retracted position in which the device 15 lies in a position over the roof 12, and an extended position in which the support device 15 projects, partially cantilevered, rearwardly beyond the roof 12 and the bodies 25.

The device 15 is lockable in both the aforesaid positions by means of reversible retaining members 36 (Figure 1), known and not described in detail, associated with the bodies 25.

In an embodiment not illustrated, the bodies 25 have no channels 34, and are connected to each other by a pair of cross-pieces. Each cross-piece defines an associated guide to which is slidingly coupled an associated slider which is slidingly connected to the device 15. The guide and slider assembly thus formed enables the device 15 to move transversely of the beams 6 to and from an extended position in which the device 15 projects laterally cantilevered beyond one of the associated beams 6.

From the above, it is clear that it is extremely simple and quick to attach the device 15 to the beams 6, even for relatively inexperienced people. In fact, it is possible first of all to attach the bodies 25 to the projections 19 by simply sliding the bodies 25 along the beams 6 and, once attached, locking the bodies 25 to the associated profiled elements 14 by means of the screws 29. The device 15 is then attached to the bodies 15 by simply sliding the runners 35 in the associated channels 34 until they locate between the retaining elements 36.

Once assembly has been completed, the device 25 can be moved towards and from its extended position in which it can easily be reached for loading and unloading operations by means of simple steps located at the rear of the motor vehicle, or directly attached to the device 15 itself, thus removing the risk of damaging the paintwork on the roof 12 or other parts of the motor vehicle body. Not only this, but if the device 15 is moved to a position projecting from a perimetral edge of the roof, it can be directly superimposed or brought alongside a bench or loading platform which is raised with respect to the surface on which the motor vehicle stands.

In addition, if the device 15 has at least one base panel and is in its extended position, it has the further function of providing a shelter, for example, from the rain, during loading/unloading operations through the rear door 10 or a side door.

Once the device 15 has been used, it can be removed from the roof 12 simply by sliding the runners 35 out from the bodies 25, which latter can be left mounted on the roof 12 without giving rise to aesthetic problems for the motor vehicle. In this case also, the subsequent remounting of the device 15 is not particularly difficult, even for inexperienced people, particularly due to the fact that it can be effected very easily upon bringing the vehicle alongside a raised surface.

From the above, it is clear that modifications and variations can be introduced to the attachment unit 23 described, which do not depart from the ambit of protection of the present invention.

In particular, the bodies 25 can have shapes and geometries different from those described and illustrated, for example, in order to adapt to different beams from those described; different guides from the guides 34 described can be provided and the different runners 35 carried by the support device 15.

From the above, it is therefore clear that support devices that are different from those described by way of example and, for example, slidable covers for the vehicle, can be attached to the bodies 25.

Finally, in relation to the beams 6 it is clear that they can be formed with a different number of profiled elements and, in particular, using a single profiled element.

## Claims

1. A unit (23) for attaching a support device (15) to the roof (12) of a motor vehicle, including at least two longitudinal beams (6) ; the unit (23) being characterised in that it includes guide means (25) associated with the said longitudinal beams (6); first connection means (26) (27, 29) carried on the said guide means (25) and coupled positively to second connection means (19) (31, 32) carried on the said beams (6); and slider means (35) carried on the said support device (15) and slidingly coupled to the said guide means (25) to move between a retracted position in which the said support device (15) lies over the said guide means (25) and, in use, the roof (12) of the motor vehicle, and an extended position in which the said support device (15) projects at least partially cantilevered from the said guide means (25) and, in use, from the said roof (12).

2. A unit according to Claim 1, characterised in that the said guide means (25) include two guide bodies (25) each of which extends along an associated longitudinal beam (6); the said support device (15), when in its extended position, projecting beyond a longitudinal end of the said guide bodies (25) and, in use, beyond the said roof (12).

3. A unit according to Claim 2, characterised in that the said first connection means (26) (27, 29) include, for each of the said bodies (25), an elongate retaining seat (26) formed in the guide body (25) itself; the said second connection means (19) engaging each of the said retaining seats (26) in axially slidable manner.

4. A unit according to Claim 3, characterised in that each of the said retaining seats (26) is substantially dovetail in shape.

5. A unit according to any preceding claim, characterised in that the said first connection means (26) (27, 29) further include locking means (29) releasably connectable to the said second connection means (31, 32) to lock the said guide bodies (25) in a fixed position with respect to the said girders (6).

6. A unit according to Claims 2 and 5, characterised in that each guide body (25) includes at least one attachment portion (27) facing the attachment portion (27) of the other guide body (25), and in that in the said locking means (29) extend through the said attachment portions (27).

7. A unit according to Claim 5 or Claim 6, characterised in that the said locking means include at least one screw (29).

8. A unit according to any preceding claim, characterised in that it includes reversible retaining means (36) associated with the said guide means (25) to hold the said support device (15) in at least one of the said positions.

9. A roof (12) of a motor vehicle including at least two longitudinal beams (6), a support device (15), and a unit (23) for connecting the said support device (15) to the said longitudinal beams (6), characterised in that the said connection unit (23) includes guide means (25) carried on the said longitudinal beams (6); first connection means (26) (27, 29) carried on the said guide means (25) and coupled positively to the said second connection means (19) (31, 32) carried on the said beams (6); and slider means (35) carried on the said support device (15) and slidingly coupled to the said guide means (25) to move between a retracted position in which the said support device (15) lies over the roof (12) of the vehicle, and an extended position in which the said support device (15) projects from the roof (12) itself.

10. A roof according to Claim 9, characterised in that the said second connection means (19) (31, 32) includes, for each said beam (6), a longitudinal projection (19) formed integrally with the associated said longitudinal beam (6); the said first connection means (26) (27, 29) including, for each said longitudinal projection (19), a longitudinal retaining seat (26) engaged in axially slidable manner by the associated longitudinal projection (19).

11. A roof according to Claim 10, characterised in that each of the said longitudinal projections (19) includes a base wall (22) and two converging side walls (21).

12. A roof according to Claim 11, characterised in that each said longitudinal projection (19) has a substantially dovetail shape in cross section.

13. A roof according to any of claims from 9 to 12, characterised in that the said second connection means (26) (27, 29) includes, for each said longitudinal beam (6), at least one threaded housing (31) carried on the longitudinal beam (6) itself, and engaged by an associated screw (29) carried on the said guide means (25).

14. A roof according to any of Claims from 10 to 14, characterised in that each of the said longitudinal beams (6) includes at least one body (14) formed by profiling; the said longitudinal projections (19) forming part of the said profiled body (14).
